# EUROPÄISCHE PATENTSCHRIFT

(11) **EP 2 010 004 B1**
(45) Veröffentlichungstag und Bekanntmachung des Hinweises auf die Patenterteilung: **14.12.2011**
(21) Anmeldenummer: 07723960.6
(22) Anmeldetag: 04.04.2007
(51) Int. Cl.: A23J 3/32

(54) **KOHLENHYDRATHALTIGE SPORTGETRÄNKE**
SPORTS BEVERAGES CONTAINING CARBOHYDRATES
BOISSONS POUR SPORTIFS CONTENANT DES HYDRATES DE CARBONE

(30) Priorität: 12.04.2006 DE 102006017611
(43) Veröffentlichungstag der Anmeldung: 07.01.2009
(73) Patentinhaber: Südzucker Aktiengesellschaft Mannheim/Ochsenfurt, 68165 Mannheim (DE)
(72) Erfinder: KOWALCZYK, Jörg, 67304 Eisenberg/Steinborn (DE); HAUSMANNS, Stephan, 65185 Wiesbaden (DE)
(74) Vertreter: Schrell, Andreas
(86) Internationale Anmeldenummer: PCT/EP2007/003019
(87) Internationale Veröffentlichungsnummer: WO 2007/118610

(56) Entgegenhaltungen:
- WO-A-2004/062385
- WO-A-2004/084655
- WO-A-2004/107883
- WO-A1-2005/061690
- FR-A- 2 865 900
- US-A1- 2002 193 342
- US-A1- 2004 132 670
- US-A1- 2006 073 186

## Beschreibung

Die vorliegende Erfindung betrifft Kohlenhydrat-haltige funktionale Getränke, die mindestens ein Proteinhydrolysat und mindestens ein Saccharoseisomer ausgewählt aus Isomaltulose und Leukrose enthalten sowie Verwendungen von Isomaltulose und/oder Leukrose in einem Kohlenhydrat-haltigen funktionalen Getränk.

Funktionale Getränke wie Energiegetränke, Sportlergetränke, Fitnessgetränke oder auch Softdrinks erfreuen sich zunehmend großer Beliebtheit. Derartige Getränke dienen aufgrund ihrer besonderen Zusammensetzung nicht allein der Flüssigkeitszufuhr, sondern versorgen den Körper zum Beispiel mit Nahrungsmittelergänzungsstoffen oder leistungsfördernden Agenzien. So sind aus der WO 2003/017788 Softdrinks oder Sportlergetränke bekannt, die Pflanzenextrakte und Isomaltulose enthalten. Die Getränke zeichnen sich durch einen erfrischenden Geschmack aus. Die WO 2004/084655 A1 offenbart Softdrinks, Energiegetränke oder Sportlergetränke, die Isomaltulose und Trehalose enthalten, wobei diese vorteilhaft insofern sind, als dass sie zu einer reduzierten glykämischen Reaktion im Körper des Konsumenten führen.

Die FR-A-2 865 900 offenbart ein funktionales Getränk, enthaltend hydrolysierte Milcheiweiße, Intensivsüßstoffe und Isomaltulose. Die US 2004/132670 A1 offenbart eine enterale Zusammensetzung, die auch zur oralen Einnahme geeignet ist, enthaltend Caseinhydrolysator und Isomaltulose. Die WO 2005/061690 A1 offenbart ein Isomaltulose-haltiges Bier, enthaltend enzymatisch verdaute Eiweiße. Die WO 2004/062385 A offenbart eine fermentierte Sojamilch, enthaltend Isomaltutose.

Die US 2006/073186 A1 offenbart ebenfalls eine enterale Zusammensetzung, enthaltend Eiweißhydrolysate und Isomaltulose. Die US 2002/193342 A offenbart eine Proteinhydrolysat-haltige Zusammensetzung zur Geschmacksverbesserung, enthaltend unter anderem Intensivsüßstoffe. Die WO 2004/107883 A offenbart ein Gemisch aus Trehalose und Proteinen zur Geschmacksverbesserung in Getränken.

Bekannt sind also auch Protein-haltige funktionale Getränke. Diese zeichnen sich jedoch in vielen Fällen durch eine schlechte Verdaubarkeit sowie einen vom Konsumenten häufig als unangenehm empfundenen Geschmack aus.

Es besteht daher ein ständiger Bedarf an weitern funktionalen Getränken, die sich einerseits durch Funktionalität in Bezug auf die Wiederherstellung und Steigerung der physischen Belastbarkeit eines Konsumenten, andererseits aber auch durch eine vergleichsweise kostengünstige Herstellung sowie insbesondere ein vom Konsumenten als angenehm empfundenen Geschmack auszeichnen. Darüber hinaus sollte das Getränk visuell ansprechend, das heißt möglichst klar und lagerstabil sein.

Die vorliegende Erfindung löst das ihr zugrundeliegende technische Problem durch die Bereitstellung eines Kohlenhydrat-haltigen funktionalen Getränkes, welches mindestens ein in einem flüssigen Medium gelöstes Proteinhydrolysat und ein im Vergleich zu Saccharose niedrig-glykämisches Saccharoseisomer, nämlich Leukrose, aufweist. Das erfindungsgemäße Getränk weist neben dem Proteinhydrolysat daher Leukrose auf.

Die vorliegende Erfindung löst das ihr zugrundeliegende technische Problem auch durch die Bereitstellung eines Kohlenhydrat-haltigen funktionalen Getränkes, umfassend mindestens ein in einem flüssigen Medium gelöstes Proteinhydrolysat, wobei das Proteinhydrolysat ein Caseinhydrolysat ist und aus kurzkettigen Peptiden mit einer durchschnittlichen Länge von maximal vier Aminosäuren besteht, und mindestens ein Saccharoseisomer ausgewählt aus der Gruppe bestehend aus Leukrose und Isomaltulose.

Liegen in dem Getränk in einer erfindungsgemäßen Ausführungsform der vorliegenden Erfindung Leukrose und Isomaltulose gemeinsam vor, kann dies vorzugsweise in einem Verhältnis Leukrose zu Isomaltulose von 1:99 Gew.-% bis 99:1 Gew.-%, insbesondere von 30:70 Gew.-% bis 70:30 Gew.-% (jeweils bezogen auf Gesamt-Trockensubstanzgehalt der beiden Isomere) der Fall sein.

Im Zusammenhang mit der vorliegenden Erfindung wird unter einem funktionalen Getränk ein Getränk verstanden, das neben der Funktion den Flüssigkeitsbedarf eines Konsumenten erfüllen zu können darüber hinaus mindestens eine weitere physiologische Funktion im Körper des Konsumenten auszuüben imstande ist, und zwar insbesondere eine physiologische Funktion im Hinblick auf die Erhaltung oder Verbesserung des körperlichen, insbesondere gesundheitlichen Zustandes des Konsumenten. Derartige funktionale Getränke können daher insbesondere Getränke sein, die zu einer Verbesserung des Muskelaufbaus, des Vermeidens von Muskelschäden, des Behebens von Muskelschäden, des Ausgleichs vermehrten Energiebedarfs, des Ausgleichs vermehrten Mineralstoff- oder Vitaminbedarfs, der Verbesserung des Fettstoffwechsels, der Prophylaxe oder Therapie von Krankheiten dienen, insbesondere alles unter Berücksichtigung eines möglichst geringen Anstiegs des Blutzuckerspiegels, das heißt niedrig glykämisch zu sein.

Die vorliegende Erfindung stellt in überraschender Weise ein Kohlenhydrat-haltiges funktionales Getränk bereit, das aufgrund der Anwesenheit eines Proteinhydrolysats in vorteilhafter Weise den Aufbau, die Regeneration beziehungsweise die Wiederherstellung von Muskelkraft beziehungsweise die Vermeidung von Muskelschäden gewährt. Dieser vorteilhaft anabolische Effekt des erfindungsgemäßen Getränkes macht dieses besonders empfehlenswert für ältere Personen, Frauen, übergewichtige Personen, Sportler und sonstige Personen, die einer besonderen Diät bedürfen. Darüber hinaus stellt sich überraschenderweise ein immunstimulatorischer Effekt ein, möglicherweise aufgrund der Anwesenheit bestimmter Aminosäure- oder Oligopeptidsequenzen in dem eingesetzten Proteinhydrolysat. Isomaltulose, 6-O-α-D-Glucopyranosyl-fructose (auch als Palatinosie® bekannt), ist ein süßendes Agens, das in etwa die Hälfte der Süßkraft von Saccharose aufweist. Es wird teilweise aufgrund des erst im Dünndarmbereich erfolgenden verzögerten Abbaus der Isomaltulose auch in speziellen Lebensmitteln für Sportler eingesetzt, um den oxidativen Metabolismus aufrechtzuerhalten. Isomaltulose wird lediglich von den Glucosidasen der menschlichen Dünndarmwand verzögert gespalten, wobei die resultierenden Abbauprodukte Glucose und Fructose resorbiert werden. Dies resultiert, verglichen zu schnell verdaulichen Kohlenhydraten, in einem langsamen Anstieg des Blutglucoselevels. Isomaltulose benötigt daher im Unterschied zu schnell verdaulichen hochglykämischen Stoffen kaum Insulin zur Verstoffwechselung. Die Verwendung von Isomaltulose in dem erfindungsgemäßen Kohlenhydrat-haltigen Getränk macht dieses Getränk daher vorteilhafterweise zu einem niedrigglykämischen Getränk, welches die Vorteile eines eine ausgezeichnete Aminosäureversorgung des Konsumenten gewährenden Getränkes mit dem eines niedrigglykämischen Getränkes verbindet. Vorteilhafterweise weist Isomaltulose im Gegensatz zu Polyolen keine laxative Wirkung auf. In überraschender Weise maskiert die Isomaltulose den für manchen Konsumenten als nicht attraktiv empfundenen Geschmack des Proteinhydrolysats, insbesondere bei Getränken mit längerer Lagerzeit. Leukrose ist ebenso wie Isomaltulose ein im Vergleich zu Saccharose niedrig-glykämisches Saccharoseisomer. Im Vergleich zu Fructose-/Glucose-haltigen Getränken weisen die erfindungsgemäßen Kohlenhydrat-haltigen funktionalen Getränke bei gleicher Süßkraft eine geringere Neigung zur Bildung von Maillard-Produkten auf. Schließlich weist das erfindungsgemäße Getränk den Vorteil auf, dass das Proteinhydrolysat vollständig löslich und das erhaltene Getränk daher klar und säurestabil ist.

In einer besonders bevorzugten Ausführungsform der ein Leukrosehaltiges funktionales Getränk betreffenden vorliegenden Erfindung ist das Proteinhydrolysat ein Caseinhydrolysat, besonders bevorzugt hergestellt aus Caseinprotein der Milch durch die Einwirkung einer Protease. In bevorzugter Ausführungsform ist das Caseinhydrolysat ein Caseinhydrolysat, das aus kurzkettigen Peptiden mit einer durchschnittlichen Kettenlänge von maximal vier Aminosäuren besteht, insbesondere aus Di- und Tripeptiden besteht. Das erfindungsgemäß bevorzugte Caseinhydrolysat ist wasserlöslich. Es enthält in bevorzugter Ausführungsform alle 20 essenziellen Aminosäuren. Die Aminosäurezusammensetzung des erfindungsgemäß besonders bevorzugten Caseinhydrolysats ist wie folgt:

| | | |
|---|---|---|
| **Aminosäuren** | **PeptoPro® (Caseinhydrolysat)** | |
| | **mol/kg** | **g/kg** |
| Glycin | 0,30 | 22,5 |
| Alanin | 0,34 | 30,3 |
| Valin | 0,58 | 68,0 |
| Leucin | 0,75 | 98,4 |
| Isoleucin | 0,40 | 52,5 |
| Prolin | 0,91 | 104,7 |
| Phenylalanin | 0,33 | 54,5 |
| Tyrosin | 0,33 | 59,8 |
| Tryptophan | 0,07 | 14,3 |
| Serin | 0,56 | 58,9 |
| Threonin | 0,37 | 44,1 |
| Cystein | 0,06 | 7,3 |
| Methionin | 0,23 | 34,3 |
| Arginin | 0,22 | 38,3 |
| Histidin | 0,21 | 32,6 |
| Lysin | 0,58 | 84,8 |
| Asparagin Asparaginsäure | 0,51^{*1)} | 67,4^{*1} |
| Glutamin Glutaminsäure | 1,54^{*2)} | 225,0^{*2)} |

| | | |
|---|---|---|
| ^{*1)} Wert steht für die Menge an Asparagin und Asparaginsäure ^{*2)} Wert steht für die Menge an Glutamin und Glutaminsäure | | |

In einer weiteren bevorzugten Ausführungsform der vorliegenden Erfindung ist vorgesehen, dass das flüssige Medium Wasser ist.

In einer weiteren bevorzugten Ausführungsform der vorliegenden Erfindung ist vorgesehen, dass das Getränk 0,1 bis 20 Gew.-%, vorzugsweise 0,3 bis 10 Gew.-% (jeweils bezogen auf das Gesamtgewicht des Getränkes) Proteinhydrolysat aufweist. In einer weiteren bevorzugten Ausführungsform der vorliegenden Erfindung ist vorgesehen, dass das erfindungsgemäße funktionale Getränk 0,1 bis 20 Gew.-%, vorzugsweise 0,3 bis 10 Gew.-% (jeweils bezogen auf das Gesamtgewicht des Getränks) Isomaltulose aufweist. In einer weiteren bevorzugten Ausführungsform der vorliegenden Erfindung ist vorgesehen, dass das erfindungsgemäße funktionale Getränk 0,1 bis 20 Gew.-%, vorzugsweise 0,3 bis 10 Gew.-% (jeweils bezogen auf das Gesamtgewicht des Getränks) Leukrose aufweist.

In einer bevorzugten Ausführungsform der vorliegenden Erfindung kann das Getränk ein Instantgetränk, ein Cola-haltiges Getränk, eine enterale Lösung, ein Erfrischungsgetränk, ein Sportlergetränk, ein Energiegetränk, ein isotonisches Getränk, ein Softdrink oder Ähnliches sein.

Eine weitere bevorzugte Ausführungsform der vorliegenden Erfindung betrifft ein Kohlenhydrat-haltiges funktionales Getränk, welches zusätzlich zum Beispiel lebensmittelverträgliche Säuren, lebensmittelverträgliche Salze, Intensivsüßstoffe, Mineralstoffe, Spurenelemente, Fruchtextrakte, Antioxidationsmittel, Stabilisatoren, Geschmacks-, Aroma- oder Geruchsstoffe, ein weiteres süßendes Agens, Koffein, Vitamine, Lipide oder Ähnliches enthält.

Als Intensivsüßstoffe können erfindungsgemäß Acesulfam H, Aspartam, Steveosid, Monellin, Cyclamat, Natrium-Cyclamat, Sucralose, Thaumatin, Dulcin, Saccharin, Neotame, Naringin-Dihydrochalkon, Neohesperidin-Dihydrochalkon, Glycyrrhizin oder Mischungen zweier oder mehrerer davon eingesetzt werden.

In einer weiteren bevorzugten Ausführungsform enthält das Getränk natürliche und/oder synthetische Farbstoffe, natürliche und/oder synthetische Vitamine, Mineralstoffe und/oder Spurenelemente.

In einer besonders bevorzugten Ausführungsform der vorliegenden Erfindung beträgt der Anteil der lebensmittelverträglichen Säuren am Getränk 0,1 bis 10 Gew.-% (bezogen auf Gesamtgewicht des Getränks).

In einer weiteren bevorzugten Ausführungsform der vorliegenden Erfindung beträgt der Anteil der Intensivsüßstoffe am Getränk 0,1 bis 1 Gew.-% (bezogen auf Gesamtgewicht des Getränks). In einer weiteren bevorzugten Ausführungsform der vorliegenden Erfindung beträgt der Anteil der Geschmacks-, Aroma- oder Geruchsstoffe am Getränk 0,5 bis 10 Gew.-% (bezogen auf Gesamtgewicht des Getränks).

Im Zusammenhang mit der vorliegenden Erfindung wird unter einer Geschmacksmaskierung eines Proteinhydrolysat-haltigen Getränkes verstanden, dass ein, beispielsweise von sachverständigen Testpersonen, als unangenehm beziehungsweise bitter empfundener Geschmack der Proteinhydrolysat-haltigen Zusammensetzung in einem Vergleichspräparat mit Proteinhydrolysat-haltiger Zusammensetzung und Vergleichssüßungsmittel mit statistisch relevanter Aussagekraft in insbesondere signifikant reduziertem Ausmaß, vorzugsweise gar nicht mehr, wahrgenommen wird, wenn diese Proteinhydrolysat-haltige Zusammensetzung in einem Getränk der Erfindung statt mit dem Vergleichsmittel zusammen mit Isomaltulose und/oder Leukrose vorliegt. Gemäß der Erfindung ist vorzugsweise vorgesehen, dass die Isomaltulose und/oder die Leukrose verwendet wird, um den bitteren Geschmack der in einem Getränk der vorliegenden Erfindung vorhandenen Proteinhydrolysat-haltigen Zusammensetzung zu maskieren, das heißt unkenntlich oder nicht wahrnehmbar beziehungsweise stark reduziert wahrnehmbar zu machen.

In einer weiteren bevorzugten Ausführungsform weist das erfindungsgemäße Getränk abgesehen von Isomaltulose und/oder Leukrose keinen weiteren Zucker, insbesondere keine Saccharose, keine Fructose, keine Tagatose und/oder keine Glucose auf. Vorzugsweise ist die Isomaltulose und/oder die Leucrose der einzige und alleinig in dem Präparat vorkommende Zucker, insbesondere das einzige und alleinig in dem Getränk vorkommende süßende Agens.

Im Zusammenhang mit der vorliegende Erfindung wird unter dem Begriff süßendes Agens eine Substanz verstanden, die Süßkraft aufweist und zum Beispiel Lebensmitteln oder Getränken zugesetzt wird, um einen süßen Geschmack hervorzurufen. Im Zusammenhang mit der vorliegenden Erfindung werden die süßenden Agenzien unterteilt in Zucker, wie Isomaltulose, Saccharose, Glucose oder Fructose, die Körper und Süßkraft geben sowie "Süßungsmittel", also Stoffe, die keine Zucker sind, aber trotzdem Süßkraft aufweisen, welche wiederum untergliedert werden in "Zuckeraustauschstoffe", also süßende Agenzien, die einen Körper und einen physiologischen Brennwert zusätzlich zu einer Süßkraft aufweisen (körpergebendes Süßungsmittel) und "Intensivsüßstoffe", also Stoffe, die in der Regel eine sehr hohe Süßkraft, aber keinen Körper und in der Regel keinen oder nur einen geringfügigen physiologischen Brennwert aufweisen.

In einer besonders bevorzugten Ausführungsform ist das erfindungsgemäße Getränk zahnschonend, akariogen und/oder diätetisch.

Erfindungsgemäß kann allerdings in einer weiteren Ausführungsform vorgesehen sein, dass die Isomaltulose und/oder die Leukrose zusammen mit Intensivsüßstoffen und/oder gegebenenfalls auch Zuckeraustauschstoffen, zum Beispiel Isomalt oder Maltodextrinen, Lactit, Maltit, Erythrit, Xylit, Mannit, Sorbit, Maltitsirup, Stärkehydrolysaten, 1,1-GPM (1-O-α-D-glucopyranosyl-D-mannit), 1,6-GPS (6-0-α-D-glucopyranosyl-D-sorbit) oder 1,1-GPS (1-O-α-D-glucopyranosyl-D-sorbit), in dem Getränk verwendet wird.

Weitere vorteilhafte Ausgestaltungen der vorliegenden Erfindung ergeben sich aus den Untersprüchen.

## Patentansprüche

1. Kohlenhydrat-haltiges funktionales Getränk, umfassend mindestens ein in einem flüssigen Medium gelöstes Proteinhydrolysat, wobei das Proteinhydrolysat ein Caseinhydrolysat ist und aus kurzkettigen Peptiden mit einer durchschnittlichen Länge von maximal vier Aminosäuren besteht, und mindestens ein Säccharoseisomer ausgewählt aus der Gruppe bestehend aus Leukrose und Isomaltulose.

2. Kohlenhydrat-haltiges funktionales Getränk, umfassend mindestens ein in einem flüssigen Medium gelöstes Proteinhydrolysat und Leukrose.

3. Getränk nach Anspruch 2, wobei das Proteinhydrolysat ein Caseinhydrolysat ist.

4. Getränk nach Anspruch 2 oder 3, wobei das Caseinhydrolysat aus kurzkettigen Peptiden mit einer durchschnittlichen Länge von maximal vier Aminosäuren besteht.

5. Getränk nach einem der vorhergehenden Ansprüche, wobei das flüssige Medium Wasser ist.

6. Getränk nach einem der vorhergehenden Ansprüche, wobei das Getränk 0,1 bis 20 Gew.-% (bezogen auf Gesamtgewicht des Getränks) Proteinhydrolysat aufweist.

7. Getränk nach einem der vorhergehenden Ansprüche, wobei das Getränk 0,1 bis 20 Gew.-% (bezogen auf Gesamtgewicht des Getränkes) Isomaltulose aufweist.

8. Getränk nach einem der vorhergehenden Ansprüche, wobei das Getränk 0,1 bis 20 -Gew.-% (bezogen auf Gesamtgewicht des Getränkes) Leykrose aufweist.

9. Getränk nach einem der vorhergehenden Ansprüche, wobei das Getränk 0,3 bis 10 Gew.-% (bezogen auf Gesamtgewicht des Getränkes) Proteinhydrolysat aufweist

10. Getränk nach einem der vorhergehenden Ansprüche, wobei das Getränk 0,3 bis 10 Gew.-% (bezogen auf Gesamtgewicht des Getränkes) Isomaltulose aufweist.

11. Getränk nach einem der vorhergehenden Ansprüche, wobei das Getränk 0,3 bis 10 Gew.-% (bezogen auf gesamtgewicht des Getränkes) Leukrose aufweist.

12. Getränk nach einem der vorhergehenden Ansprüche, wobei das Getränk ein Instantgetränk, ein Erfrischungsgetränk, ein Cola-haltiges Getränk, eine enterale Lösung, ein Sportlergetränk, ein isotonisches Getränk, ein Energiegetränk oder ein Softdrink ist.

13. Getränk nach einem der vorhergehenden Ansprüche, wobei das Getränk lebensmittelverträgliche Säuren, lebensmittelverträgliche Salze, Intensivsüßstoffe, Mineralstoffe, Spurenelemente, Fruchtextrakte, Antioxidationsmittel, Stabilisatoren, Geschmacks-, Aroma- oder Geruchsstoff, Vitamine, ein Malzextrakt, ein süßendes Agens und/oder Koffein enthält.

14. Getränk nach einem der vorhergehenden Ansprüche, wobei der Anteil der lebensmittelverträglichen Sauren am Getränk 0,1 bis 10 Gew.-% (bezogen auf Gesamtgewicht des Getränks) beträgt.

15. Getränk nach einem der vorhergehenden Ansprüche, wobei der Anteil der Intensivsüßstoffe am Getränk 0,1 bis 1 Gew.-% (bezogen auf Gesamtgewicht des Getränks) beträgt.

16. Getränk nach einem der vorhergehenden Ansprüche, wobei der Anteil der Geschmacks-, Aroma- oder Geruchsstoffe am Getränk 0,5 bis 10 Gew.-% (bezogen auf Gesamtgewicht des Getränks) beträgt.

17. Getränk nach einem der vorhergehenden Ansprüche, wobei das Getränk natürliche und/oder synthetische Farbstoffe enthält.

18. Getränk nach einem der vorhergehenden Ansprüche, wobei das Getränk natürliche oder synthetische Vitamine enthält.

19. Getränk nach einem der vorhergehenden Ansprüche, wobei das Getränk Mineralstoffe und Spurenelemente enthält.

20. Verwendung von Isomaltulose in einem Proteinhydrolysat-haltigen Getränk zur Geschmacksverbesserung.

21. Verwendung von Leukrose in einem Proteinhydrolysat-haltigen Getränk zur Geschmacksverbesserung.

## Claims

1. A functional beverage containing carbohydrate, comprising at least one protein hydrolysate dissolved in a liquid medium, such that the protein hydrolysate is a casein hydrolysate and consists of short-chain peptides with an average length of at most four amino acids and at least one sucrose isomer selected from the group consisting of leucrose and isomaltulose.

2. A functional beverage containing carbohydrate, comprising at least one protein hydrolysate dissolved in a liquid medium and leucrose.

3. The beverage according to Claim 2, wherein the protein hydrolysate is a casein hydrolysate.

4. The beverage according to Claim 2 or 3, wherein the casein hydrolysate consists of short-chain peptides with an average length of at most four amino acids.

5. The beverage according to any one of the preceding claims, wherein the liquid medium is water.

6. The beverage according to any one of the preceding claims, wherein the beverage contains 0.1 to 20 wt% (based on the total weight of the beverage) protein hydrolysate.

7. The beverage according to any one of the preceding claims, wherein the beverage contains 0.1 to 20 wt% (based on the total weight of the beverage) isomaltulose.

8. The beverage according to any one of the preceding claims, wherein the beverage contains 0.1 to 20 wt% (based on the total weight of the beverage) leucrose.

9. The beverage according to any one of the preceding claims, wherein the beverage contains 0.3 to 10 wt% (based on the total weight of the beverage) protein hydrolysate.

10. The beverage according to any one of the preceding claims, wherein the beverage contains 0.3 to 10 wt% (based on the total weight of the beverage) isomaltulose.

11. The beverage according to any one of the preceding claims, wherein the beverage contains 0.3 to 10 wt% (based on the total weight of the beverage) leucrose.

12. The beverage according to any one of the preceding claims, wherein the beverage is an instant beverage, a refreshment beverage, a beverage containing cola, an enteral solution, a sports beverage, an isotonic beverage, an energy beverage or a soft drink.

13. The beverage according to any one of the preceding claims, wherein the beverage contains food-compatible acids, food-compatible salts, intense sweeteners, minerals, trace elements, fruit extracts, antioxidants, stabilizers, flavoring substances, aroma substances, fragrance substances, vitamins, a malt extract, a sweetening agent and/or caffeine.

14. The beverage according to any one of the preceding claims, wherein the amount of food-compatible acids in the beverage amounts to 0.1 to 10 wt% (based on the total weight of the beverage).

15. The beverage according to any one of the preceding claims, wherein the amount of intense sweeteners in the beverage amounts to 0.1 to 1 wt% (based on the total weight of the beverage).

16. The beverage according to any one of the preceding claims, wherein the amount of flavoring substances, aroma substances or fragrance substances in the beverage amounts to 0.5 to 10 wt% (based on the total weight of the beverage).

17. The beverage according to any one of the preceding claims, wherein the beverage contains natural and/or synthetic coloring agents.

18. The beverage according to any one of the preceding claims, wherein the beverage contains natural or synthetic vitamins.

19. The beverage according to any one of the preceding claims, wherein the beverage contains minerals and trace elements.

20. The use of isomaltulose in a beverage that contains protein hydrolysate to improve the taste.

21. The use of leucrose in a beverage that contains protein hydrolysate to improve the taste.

## Revendications

1. Boisson fonctionnelle contenant des glucides, comprenant au moins un hydrolysat protéique dissous dans un milieu liquide, dans laquelle l'hydrolysat protéique est un hydrolysat de caséine et se compose de peptides à chaîne courte avec une longueur moyenne de quatre acides aminés maximum, et au moins un isomère de saccharose sélectionné parmi le groupe constitué du leucrose et de l'isomaltulose.

2. Boisson fonctionnelle contenant des glucides, comprenant au moins un hydrolysat protéique dissous dans un milieu liquide et du leucrose.

3. Boisson selon la revendication 2, dans laquelle l'hydrolysat protéique est un hydrolysat de caséine.

4. Boisson selon la revendication 2 ou 3, dans laquelle l'hydrolysat de caséine se compose de peptides à chaîne courte avec une longueur moyenne de quatre acides aminés maximum.

5. Boisson selon l'une quelconque des revendications précédentes, dans laquelle le milieu liquide est de l'eau.

6. Boisson selon l'une quelconque des revendications précédentes, dans laquelle la boisson présente 0,1 à 20 % en poids (par rapport au poids total de la boisson) d'hydrolysat protéique.

7. Boisson selon l'une quelconque des revendications précédentes, dans laquelle la boisson présente 0,1 à 20 % en poids (par rapport au poids total de la boisson) d'isomaltulose.

8. Boisson selon l'une quelconque des revendications précédentes, dans laquelle la boisson présente 0,1 à 20 % en poids (par rapport au poids total de la boisson) de leucrose.

9. Boisson selon l'une quelconque des revendications précédentes, dans laquelle la boisson présente 0,3 à 10 % en poids (par rapport au poids total de la boisson) d'hydrolysat protéique.

10. Boisson selon l'une quelconque des revendications précédentes, dans laquelle la boisson présente 0,3 à 10 % en poids (par rapport au poids total de la boisson) d'isomaltulose.

11. Boisson selon l'une quelconque des revendications précédentes, dans laquelle la boisson présente 0,3 à 10 % en poids (par rapport au poids total de la boisson) de leucrose.

12. Boisson selon l'une quelconque des revendications précédentes, dans laquelle la boisson est une boisson instantanée, une boisson rafraîchissante, une boisson contenant du cola, une solution entérale, une boisson pour l'hydratation du sportif, une boisson isotonique, une boisson énergisante ou une boisson non alcoolisée.

13. Boisson selon l'une quelconque des revendications précédentes, dans laquelle la boisson contient des acides compatibles avec les aliments, des sels compatibles avec les aliments, des édulcorants intensifs, des minéraux, des oligoéléments, des extraits de fruit, des antioxydants, des stabilisateurs, des aromates artificiels, des arômes ou des substances odorantes, des vitamines, un extrait de malt, un agent édulcorant et/ou de la caféine.

14. Boisson selon l'une quelconque des revendications précédentes, dans laquelle la proportion en acides compatibles avec les aliments dans la boisson se monte à 0,1 à 10 % en poids (par rapport au poids total de la boisson).

15. Boisson selon l'une quelconque des revendications précédentes, dans laquelle la proportion en édulcorants intensifs dans la boisson se monte à 0,1 à 1 % en poids (par rapport au poids total de la boisson).

16. Boisson selon l'une quelconque des revendications précédentes, dans laquelle la proportion en aromates artificiels, arômes ou substances odorantes dans la boisson se monte à 0,5 à 10 % en poids (par rapport au poids total de la boisson).

17. Boisson selon l'une quelconque des revendications précédentes, dans laquelle la boisson contient des colorants naturels et/ou synthétiques.

18. Boisson selon l'une quelconque des revendications précédentes, dans laquelle la boisson contient des vitamines naturelles ou synthétiques.

19. Boisson selon l'une quelconque des revendications précédentes, dans laquelle la boisson contient des minéraux et des oligoéléments.

20. Utilisation d'isomaltulose dans une boisson contenant un hydrolysat protéique en vue d'améliorer le goût.

21. Utilisation de leucrose dans une boisson contenant un hydrolysat protéique en vue d'améliorer le goût.
